**Europäisches Patentamt**

**European Patent Office** (11) Veröffentlichungsnummer: **0 156 126**

**Office européen des brevets** **B1**

(12) **EUROPÄISCHE PATENTSCHRIFT**

(45) Veröffentlichungstag der Patentschrift: (51) Int. Cl.⁴: **F 27 D 11/08,** F 27 B 14/10,
**19.04.89** F 27 D 1/00, F 27 B 14/06

(21) Anmeldenummer: **85101195.7**

(22) Anmeldetag: **05.02.85**

(54) **Herdboden, besonders für Gleichstrom-Lichtbogenöfen.**

(30) Priorität: **14.03.84 DE 3409255**

(43) Veröffentlichungstag der Anmeldung:
**02.10.85 Patentblatt 85/40**

(45) Bekanntmachung des Hinweises auf die Patenterteilung:
**19.04.89 Patentblatt 89/16**

(84) Benannte Vertragsstaaten:
**AT BE CH DE FR GB IT LI LU SE**

(56) Entgegenhaltungen:
**DE-C-219 575**
**DE-C-252 528**
**DE-C-631 872**
**GB-A-118 357**
**GB-A-2 055 028**

(73) Patentinhaber: **MAN GUTEHOFFNUNGSHÜTTE
GMBH, Bahnhofstrasse, 66 Postfach 11 02 40,
D-4200 Oberhausen 11 (DE)**

(72) Erfinder: **Hlawatschek, Hartmut, Dr., Michael-
Müller- Ring 4, D-6500 Mainz- Bretzenheim (DE)**
Erfinder: **Geisdorf, Günter, Dr., Horchheimer
Strasse 2, D-6200 Wiesbaden- Nordenstadt (DE)**
Erfinder: **Böhn, Kurt, Middeweg 65, D-4250 Bottrop
(DE)**
Erfinder: **Schubert, Manfred, Zum Brunsloh 7,
D-4200 Oberhausen 14 (DE)**

LIBER, STOCKHOLM 1989

EP 0 156 126 B1

## Beschreibung

Die Erfindung betrifft einen Herdboden für Gleichstrom-Lichtbogenöfen, mit einer in das Ofengefäß hineinragenden, zentrischen Graphitelektrode und mehreren in den Boden eingelassen, koaxial stehenden Metall- bzw. Stahlstäben, deren äußere Enden von einer fundamentalen Stahlplatte des metallischen Ofenmantels erfaßt sind.

Bei diesem Ofentyp, der neuerdings betrieblich eingesetzt wird, weist der Blechmantel des Herdbodens eine zentrische Stahlplatte mit eingesetzten Stahlstäben auf, die das feuerfeste Material des Bodens bis zur Feuerseite durchdringen. Solche Herdböden für Gleichstrom-Lichtbogenöfen sind u. a. aus DE-C-252 528, DE-C-219 575 und GB-A-2 055 028 bekannt. Die Stahlstäbe fungieren als Anode, während die zentrisch von oben angeordnete übliche Graphitelektrode als Kathode geschaltet ist. Sozusagen mündet dabei der Lichtbogen im Herdboden, der dadurch ungewöhnlichen Beanspruchungen ausgesetzt ist, denen bekannte Böden, beispielsweise konventioneller Drehstrom-Lichtbogenöfen, nicht befriedigend standhalten.

Aufgabe vorliegender Erfindung ist es, einen Herdboden für Gleichstrom-Lichtbogenöfen mit in der Praxis befriedigender Standzeit zu schaffen.

Die gestellte Aufgabe wird gemäß der Erfindung dadurch gelöst, daß der Boden wenigstens im Bereich der Stahlstäbe und der Stahlplatte eine obere, feuerseitige Schicht aus chromoxidhaltigem Magnesia und eine untere, organisch gebundene Graphitschicht sowie eine dazwischenliegende, aus beiden Materialien gemischte Schicht aufweist.

Ein solcher Boden zeichnet sich durch gute Wärmeführung und elektrische Leitfähigkeit parallel zu den Schichten aus. Während die Magnesiaschicht die üblichen feuerfesten Funktionen gegenüber erosiven Angriffen und thermischen Beanspruchungen der Stahlschmelze bestens erfüllt, bewirkt die graphithaltige, thermisch immer noch relativ hoch belastete Zwischenschicht einen Wärmeausgleich und bereitet insbesondere eine gleichmäßige Verteilung des elektrischen Stromflusses auf die im Boden steckenden Stahlstäbe vor, deren gleichmäßige elektrische Belastung letztlich durch die untere Graphitschicht herbeigeführt wird, die mit der die Anodenbasis bildenden Stahlplatte direkten Kontakt hat. Das thermomechanische Verhalten der Schichtenanordnung bzw. des Herdbodens als Einheit ist ausgezeichnet und seine Haltbarkeit hervorragend.

Im einzelnen sieht die Erfindung vor, daß die feuerseitige Magnesiaschicht aus einer Magnesiamasse mit wenigstens 90 Gew.-% MgO sowie wenigstens 1,5 Gew.-% grünes feinkörniges $Cr_2O_3$ und die organisch gebundene Graphitschicht aus einer Graphitmasse mit wenigstens 95 Gew.-% Graphit besteht, wobei der Anteil der Graphitmasse in der Zwischenschicht zwischen 20 und 80 Gew.-% betragen kann, vorzugsweise aber 40 Gew.-% beträgt. Die vorgeschlagene Magnesiamasse kommt aufgrund ihrer physikalischen Eigenschaften den feuerseitigen Betriebsverhältnissen des Ofens bestens entgegen. Ebenso die vorgeschlagene Graphitmasse hinsichtlich der Leitfähigkeit und dem vorgeschlagenen Massengemisch, das mühelos gemischt werden kann und beim Verstampfen der Massen eine lagenfreie Verzahnung sowohl zur Magnesiamasse als auch zur Graphitmasse zuläßt.

Mit Bezug auf die konstruktive Ausbildung des Herdbodens wird gemäß der Erfindung vorgeschlagen, daß die feuerseitige Magnesiaschicht wenigstens die Hälfte der Bodendicke beträgt. Dies ergibt für den Herdboden zweckdienliche Abmessungen der Massenschichten, die aus statischen Gründen vorteilhaft innerhalb der bis zur zentrischen Metallplatte stufenweise abgesetzten, feuerfesten Auskleidung des Herdes angeordnet sind.

Die Erfindung ist nachstehend anhand der schematischen Zeichnung beispielsweise erläutert.

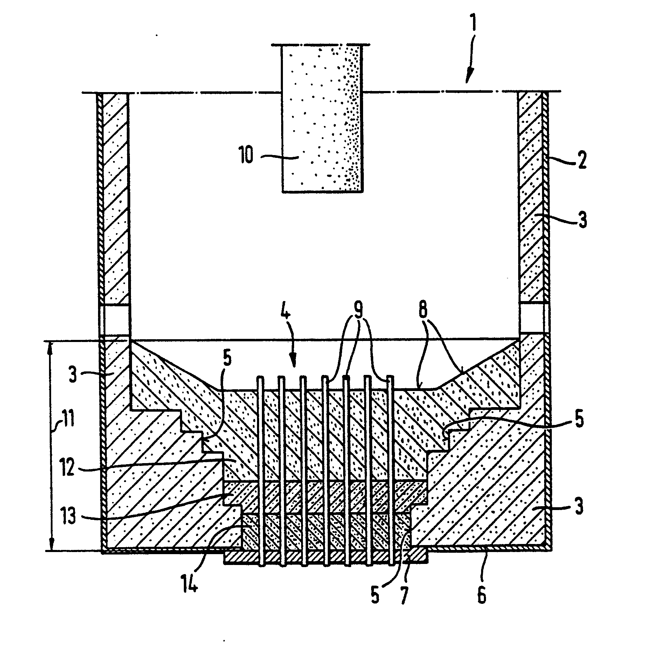

In der Zeichnung bedeutet 1 einen Gleichstrom-Lichtbogenofen, der einen Blechmantel 2 und eine feuerfeste Auskleidung 3 aufweist. Im Herd 4 ist die Auskleidung 3 als abgestufte Umfangsböschung 5 geformt, die bis zum äußeren Umfang einer im Blechboden 6 angeordneten Stahlplatte 7 reicht, in der über eine Kreisfläche verteilt, lotrechte, über die feuerseitige Bodenfläche 8 hinausragende Stahlstäbe 9 befestigt sind. Diese bilden die Anode einer Elektrodenschaltung, der als Kathode eine durch den Ofendeckel ragende Graphitelektrode 10 gegenübersteht.

Der eigentliche Herdboden 11, in den die Stahlstäbe 9 eingelassen sind, besteht aus einer oberen Magnesiaschicht 12, einer Zwischenschicht 13 aus Magnesia und Graphit und einer Graphitschicht 14. Die Schichten 12, 13, 14 sind aus ungeformten feuerfesten Massen hergestellt, wobei innerhalb der Umfangsböschung 5 des Herdes 4 zunächst die Graphitschicht 14 eingestampft wird, mit einer Verdichtung, die eine Ausrichtung des blättchenartigen Graphits in horizontaler Richtung bewirkt, was vor allem die elektrische Leitfähigkeit der Schicht 14 begünstigt. Danach werden die Zwischenschicht 13 und die Magnesiaschicht 14 eingestampft, unter Beachtung einer guten Verzahnung des Materials an den Grenzflächen, wozu die Zwischenschicht 13, die Charakteristiken der Magnesiaschicht 12 und der Graphitschicht 14 enthält, dienlich ist. Auf diese Weise wird ein dem Gesamtverhalten des Herdes 11 im Betrieb äußerst zuträglicher, ausgezeichneter Verbund der Schichten 12, 13, 14 ohne Lagenbildung erreicht.

Es ist ersichtlich, daß beim Betrieb des Ofens der Lichtbogen direkt auf die Beschickung wirkt, die beispielsweise über noch nicht eingeschmolzene Metallstücke unterschiedlichen Kontakt zu den Stahlstäben 9 haben kann. Ein dadurch bedingter unterschiedlicher Stromfluß im Anodenquerschnitt wird durch die elektrisch leitfähigen Schichten 13 und 14, die als elektrischer Verbund zwischen den Stahlstäben 9 wirken, weitgehend unterbunden. Die elektrisch kaum leitfähige Magnesiaschicht 12 führt die Wärme in Richtung Blechmantel 2 ab, so daß von den darunter liegenden, weniger hitzebeständigen Schichten 13, 14 schädliche Temperatureinwirkungen ferngehalten werden.

**Patentansprüche**

1. Herdboden für Gleichstrom-Lichtbogenöfen, mit einer in das Ofengefäß hineinragenden, zentrischen Graphitelektrode und mehreren in den Boden eingelassen, koaxial stehenden Metall- bzw. Stahlstäben, deren äußere Ende von einer fundamentalen Stahlplatte des metallischen Ofenmantels erfaßt sind, dadurch gekennzeichnet, daß der Boden (11) wenigstens im Bereich der Stahlstäbe (9) und der Stahlplatte (7) eine obere, feuerseitige Schicht (12) aus chromoxidhaltigem Magnesia und eine untere, organisch gebundene Graphitschicht (14) sowie eine dazwischenliegende, aus beiden Materialien gemischte Schicht (13) aufweist.

2. Herdboden nach Anspruch 1, dadurch gekennzeichnet, daß die feuerseitige Magnesiaschicht (12) aus einer Magnesiamasse mit wenigstens 90 Gew.-% MgO sowie wenigstens 1,5 Gew.-% Cr₂O₃ und die organisch gebundene Graphitschicht (14) aus einer Graphitmasse mit wenigstens 95 Gew-% Graphit besteht.

3. Herdboden nach Anspruch 1 und 2, dadurch gekennzeichnet, daß die aus chromoxidhaltigem Magnesia und organisch gebundenem Graphit bestehende Zwischenschicht (13) 20 bis 80 Gew.-% Graphit aufweist.

4. Herdboden nach den Ansprüchen 1 bis 3, dadurch gekennzeichnet, daß die feuerseitige chromoxidhaltige Magnesiaschicht (12) wenigstens die Hälfte der Dicke des Bodens (11) beträgt.

5. Herdboden nach den vorherigen Ansprüchen, dadurch gekennzeichnet, daß die Massenschichten (12, 13, 14) innerhalb der bis zur zentrischen Metallplatte (7) stufenweise abgesetzten, feuerfesten Auskleidung des Herdes (4) angeordnet sind.

**Claims**

1. Hearth bottom for a direct current arc furnace, with a central graphite electrode projecting into the oven vessel and a plurality of coaxially arranged metal or steel rods set in the bottom, whose outer ends are engaged by a steel base plate of the metallic furnace casing, characterized in that the bottom (11) comprises at least in the region of the steel rods (9) and the steel plate (7) an upper layer 12 on the furnace side of magnesia containing chromium oxide and a lower organically bound graphite layer (14), as well as an intervening layer (13) of the two materials in mixture.

2. Hearth bottom according to claim 1, characterized in that the magnesia layer (12) on the furnace side consists of a magnesia mass with at least 90 % by weight MgO as well as at least 1.5 % by weight Cr₂O₃ and the organically bound graphite layer (14) consists of as graphite mass with at least 95 % by weight graphite.

3. Hearth bottom according to claim 1 and 2, characterized in that the intermediate layer (13) consisting of magnesia containing chromium oxide and organically bound graphite comprises 20 to 80 % by weight graphite.

4. Hearth bottom according to claims 1 to 3, characterized in that the magnesia layer (12) on the furnace side, containing chromium oxide amounts to at least half the thickness of the bottom (11).

5. Hearth bottom according to the preceding claims, characterized in that the mass layers (12, 13, 14) are arranged within the refractory cladding of the hearth (4) which is stepwise recessed up to the central metal plate (7).

**Revendications**

1. Fond de creuset pour des fours à arcs à courant continu, avec une électrode centrale de graphite faisant saillie à l'intérieur de la cuve et du four, et avec plusieurs barreaux de métal ou d'acier disposés verticalement et co-axialement, insérés dans le fond du creuset, et dont les extrémités extérieures sont saisies par une plaque d'acier fondamentale de l'enveloppe métallique du four, fond de creuset caractérisé en ce que ce fond (11) comporte, au moins dans la zone des barreaux d'acier (9) et de la plaque d'acier (7) une couche supérieure (12) côté feu, en magnésie contenant de l'oxyde de chrome, et une couche inférieure de graphite (14) liée organiquement, ainsi qu'une couche intermédiaire (13) constituée d'un mélange des deux matériaux.

2. Fond de creuset selon la revendication 1, caractérisé en ce que la couche de magnésie (12) côté feu, est constituée d'une masse de magnésie comportant au moins 90 % en poids de MgO ainsi qu'au moins 1,5 % en poids de Cr₂O₃, tandis que la couche de graphite (14) liée organiquement, est constituée d'une masse de graphite comportant au moins 95 % en poids de graphite.

3. Fond de creuset selon la revendication 1 ou 2, caractérisé en ce que la couche intermédiaire (13) constituée de magnésie contenant de l'oxyde de chrome et de graphite liés organiquement, comporte 20 à 80 % en poids de graphite.

4. Fond de creuset selon les revendications 1 à 3, caractérisé en ce que la couche de magnésie (12) côté feu, contenant de l'oxyde de chrome, représente environ la moitié de l'épaisseur du fond (11).

5. Fond de creuse selon les précédentes revendications, caractérisé en ce que les couches massiques (12, 13, 14) sont disposées à l'intérieur du revêtement réfractaire du creuset (4) étagées en gradins jusqu'à la plaque métallique centrale (7).